# EUROPEAN PATENT APPLICATION

(11) **EP 3 007 306 A1**
(43) Date of publication of application: **13.04.2016**
(21) Application number: 13886291.7
(22) Date of filing: 05.06.2013
(51) Int. Cl.: H02J 7/00, A24F 47/00

(54) **ELECTRONIC CIGARETTE CHARGING METHOD AND ELECTRONIC CIGARETTE CASE**

(71) Applicant: KIMREE HI-TECH INC., Road Town, Tortola (VG)
(72) Inventor: XIANG, Zhiyong, Shenzhen Guangdong 518057 (CN)
(74) Representative: Puschmann Borchert Bardehle Patentanwälte Partnerschaft mbB
(86) International application number: PCT/CN2013/076808
(87) International publication number: WO 2014/194499

(57) **Abstract**

An electronic cigarette charging method and an electronic cigarette case are provided. The electronic cigarette charging method comprises: charging an electronic cigarette for a preset time length at a preset first voltage and limiting a maximum charging current at a preset first current in the charging process; detecting a charging current and/or voltage in the charging process of the preset time length and selecting different charging modes to charge the electronic cigarette according to the detected current and/or voltage. The electronic cigarette case can compatibly charge the electronic cigarette in different charging management modes and automatically select a charging mode according to the charging management mode of the electronic cigarette. The present invention is easy to use, reduces cost, and improves user experience, thereby better meeting consumption requirements of users.

## Description

### FIELD OF THE INVENTION

The present invention relates to the field of electrical cigarettes, and more particularly, relates to a charging method of electronic cigarettes and an electronic cigarette case.

### BACKGROUND OF THE INVENTION

An electronic cigarette case is a device configured for storing electronic cigarettes. In addition, the electronic cigarette case can further use a rechargeable battery to store energy and charge a battery inside an electronic cigarette.

At present, there are generally two kinds of charge management methods for batteries inside electronic cigarettes. In one of the two methods, there is a charging management circuit in a charging circuit of an electronic cigarette, and an electronic cigarette case can adopt a 5V direct current (DC) to charge the battery inside the electronic cigarette. In the other one of the two methods, there is no charging management circuit in the charging circuit of the electronic cigarette, and the electronic cigarette case needs to charge the battery inside the electronic cigarette by means of using constant charging current and limiting a charging voltage to be not more than 4.2Vcharge.

From the above, if there is no charging management circuit in the electronic cigarette, and an electronic cigarette case directly uses the 5V DC voltage to charge the battery of the electronic cigarette, there is a risk of overcharging, and the battery of the electronic cigarette may be even caused to explode. If there is a charging management circuit in an electronic cigarette, and an electronic cigarette case charges a battery inside the electronic cigarette by means of using constant charging current and limiting a charging voltage to be not more than 4.2V, it may be unable to be fully charged, long charging time may be spent, and the needs of users are unable to be met well.

In order to solve above problems, if an electronic cigarette case is provided with two different charging modules to charge the electronic cigarette with the charging management circuit and the electronic cigarette without the charging management circuit respectively, the cost is high, and user' needs are unable to be met well yet.

### SUMMARY OF THE INVENTION

The present invention is configured to solve the problem of the prior art that an electronic cigarette case can only charge either an electronic cigarette with a charging management circuit or an electronic cigarette without a charging management circuit, and to solve the defect that it cannot be compatible with both the two kinds of electronic cigarettes. Thus, a charging method for electronic cigarettes and an electronic cigarette case are provided.

The technical solutions of the present invention for solving the technical problems are as follows: a charging method of electronic cigarettes is provided, comprising:
using a preset first voltage to charge an electronic cigarette for a preset length of time, and setting the maximum value of charging current to be a preset first current value in the charging process;
detecting the charging current and/or a charging voltage in the charging process for the preset length of time, and selecting different charging modes to charge the electronic cigarette according to the detected current value and/or the detected voltage value.

Advantageously, the charging modes include a first charging mode and a second charging mode; when the detected current value is more than or equal to a preset second current value, or the detected voltage value is less than or equal to a preset second voltage value, the first charging mode is selected to charge the electronic cigarette;
when the detected current value is less than the preset second current value or the detected voltage value is more than the preset second voltage value, the second charging mode is selected to charge the electronic cigarette.

Advantageously, the first charging mode is a charging mode that uses constant charging current and limits a charging voltage to be not more than 4.2V.

Advantageously, the second charging mode is a charging mode that uses a 5V charging voltage. Advantageously, the preset second current value is more than the constant charging current value of the electronic cigarette.

Advantageously, the method further includes: detecting the charging current value in the charging process of the first charging mode or the second charging mode, and stopping charging the electronic cigarette when the detected current value is less than a preset third current value.

Advantageously, the preset first voltage is 5V.

Advantageously, the preset length of time is 1 second.

Advantageously, the preset first current value is more than the constant charging current value of the electronic cigarette.

An electronic cigarette case, configured for charging electronic cigarettes, is provided; the electronic cigarette case includes:
a microprocessor, a charging detection module respectively connected with the microprocessor and the electronic cigarette, and an electronic cigarette charging module respectively connected with the microprocessor and the electronic cigarette;
the microprocessor is configured to control the charging module to charge the electronic cigarette using the preset first voltage for a preset length of time, and the maximum value of charging current is defined as a preset first current value in the charging process;
the charging detection module is configured to detect the charging current and/or the charging voltage in the charging process for the preset length of time;
according to the detected current value and/or the detected voltage value, the microprocessor is used to control the charging module of the electronic cigarette to select different charging modes to charge the electronic cigarette.

Advantageously, the charging modes include a first charging mode and a second charging mode; when the current value detected by the charging detection module is more than or equal to a preset second current value, or the voltage value detected by the charging detection module is less than or equal to a second voltage preset value, the microprocessor controls the electronic cigarette charging module to select the first charging mode to charge the electronic cigarette;
when the current value detected by the charging detection module is less than the preset second current value or the voltage value detected by the charging detection module is more than the preset second voltage value, the microprocessor controls the electronic cigarette charging module to select the second charging mode to charge the electronic cigarette.

Advantageously, the first charging mode is a charging mode that uses constant charging current and limits a charging voltage to be not more than 4.2V.

Advantageously, the second charging mode is a charging mode that uses a 5V charging voltage. Advantageously, in the charging process that the electronic cigarette module charges in the first charging mode or the second charging mode, the charging detection module is further configured to detect the charging current value;
the microprocessor is further used to compare the current value in the charging process of the electronic cigarette charging module detected by the charging detection module and the preset third current value, and if the detected current value is less than a preset third current value, the electronic cigarette charging module is controlled to stop charging the electronic cigarette.

Advantageously, the electronic cigarette case further includes a booster module and a rechargeable battery, the booster module is used to boost a voltage of the battery to charge the electronic cigarette. Advantageously, the electronic cigarette case further includes a low voltage detection module, an overcurrent detection module, an overvoltage detection module, a charging module, and a charging management module;
the low voltage detection module is configured to detect the voltage of the rechargeable battery in the electronic cigarette case and a detected voltage value is transmitted to the microprocessor, and when the detected voltage value is less than a preset voltage value, the microprocessor will control to turn off the charging circuit;
the overcurrent detection module is configured to detect a current of the charging circuit in the electronic cigarette case and a detected current value is transmitted to the microprocessor, and when the detected current value is more than a preset current value, the microprocessor will control to turn off the charging circuit;
the overvoltage detection module is configured to detect a voltage of the charging circuit in the electronic cigarette case and a detected voltage value is transmitted to the microprocessor, and when the detected voltage value is more than a preset voltage value, the microprocessor will control to turn off the charging circuit;
the charging module is configured to connect with an external power source, and to charge the rechargeable battery in the electronic cigarette case; and
the charging management module is configured to manage the charging process that the rechargeable battery of the electronic cigarette case is charged by the external charging power source, and to ensure that a charging mode used to charge the rechargeable battery is a constant current or constant voltage mode.

Advantageously, the preset first current value is more than the constant charging current value of the electronic cigarette.

Advantageously, the preset second current value is more than the constant charging current value of the electronic cigarette.

When implementing the charging method of electronic cigarettes and the electronic cigarette case of the present invention, the following advantageous effects can be achieved: the electronic cigarette case is enabled to be compatible with different charging management modes for charging the electronic cigarettes, and the charging modes can be automatically selected according to the different charging management modes of the electronic cigarettes. The electronic cigarette case is easy to use, and the cost can be reduced. Users' experiences can be improved, and the users' demands can be met better.

### BRIEF DESCRIPTION OF THE DRAWINGS

The present invention will be further described with reference to the accompanying drawings and embodiments in the following, in the accompanying drawings:
- Fig. 1: illustrates a structure of an electronic cigarette case according to an embodiment of the present invention;
- Fig. 2: is a circuit diagram of a charging detection module according to an electronic cigarette case of an embodiment of the present invention;
- Fig. 3: is a circuit diagram of a booster module of an electronic cigarette case according to a first embodiment of the present invention;
- Fig. 4: is a circuit diagram of a booster module of an electronic cigarette case according to a second embodiment of the present invention;
- Fig. 5: is a flow chart of a charging method of electronic cigarettes according to a first embodiment of the present invention;
- Fig. 6: is a flow chart of a charging method of electronic cigarettes according to a second embodiment of the present invention.

### DETAILED DESCRIPTION OF THE PREFERRED EMBODIMENT

To make the technical feature, objective and effect of the present invention be understood more clearly, now the specific implementation of the present invention is described in detail with reference to the accompanying drawings and embodiments.

In one embodiment of the present invention, the electronic cigarette is a chargeable electronic cigarette comprising a battery pole. When charging, the battery pole of the electronic cigarette is inserted in a charging socket of an electronic cigarette case. A rechargeable battery in the electronic cigarette case charges the battery of the electronic cigarette.

If the electronic cigarette comprises a charging management circuit, a 5V DC voltage can be used to charge the battery of the electronic cigarette. The charging management circuit ensures the electronic cigarette charging process to be constant current charging, constant voltage charging, and trickle current charging in turn. Another case is that, if the electronic cigarette has no charging management circuit, the battery of the electronic cigarette is charged by means of using constant charging current and limiting a charging voltage to be not more than 4.2V.

In the embodiment of the invention, a microprocessor of the electronic cigarette case can detect the charging current in a very short time (such as within1s) to determine whether the electronic cigarette includes a charging management circuit or not, and a booster module may be used to boost the charging voltage. Thus, the microprocessor can ensure that the electronic cigarette case select different charging modes to charge different electronic cigarettes automatically. The electronic cigarette case is easy to use, and the cost can be reduced. Users' experiences can be improved, and the users' demands can be met better.

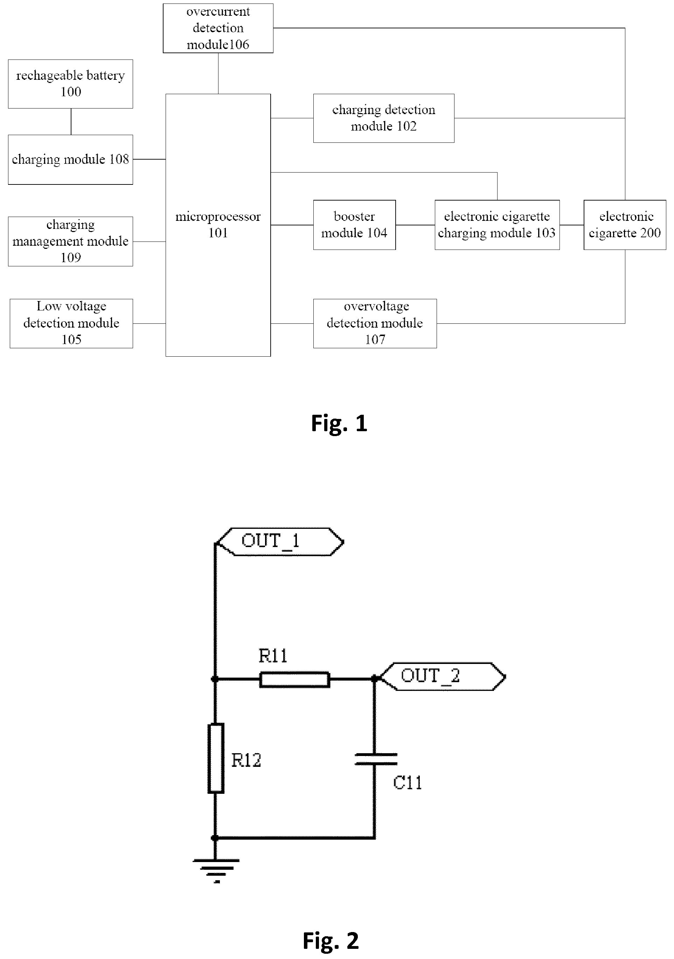

Referring to Fig. 1, it illustrates a structure of an electronic cigarette case according to an embodiment of the present invention. In this embodiment of the present invention, the electronic cigarette case can be used to charge an electronic cigarette 200. The electronic cigarette case comprises a rechargeable battery 100, a microprocessor 101, a charging detection module 102 connected with the microprocessor 101 and the electronic cigarette 200 respectively, and an electronic cigarette charging module 103 connected with the microprocessor 101, the rechargeable battery 100 and the electronic cigarette 200 respectively.

The microprocessor 101 is configured for controlling the electronic cigarette charging module 103 to charge the electronic cigarette 200 for a preset length of time using a preset first voltage, and limiting a maximum of charging current to be not more than a preset first current value during the charging process.

The charging detection module 102 is configured for detecting the charging current and/or the charging voltage in the charging process with the preset length of the time. Referring to Fig. 2, it is a circuit diagram of the charging detection module 102 according to an embodiment of the present invention. The charging detection module 102 comprises two resistors R11, R12, and a capacitor C11. One end of the resistor R11 is connected with the resistor R12 and an OUT_1 end, and the other end of the resistor R11 is connected with an anode of the capacitor C11 and an OUT_2 end. One end of the resistor R12 is connected with the OUT_1 end and one end of the resistor R11, and the other end of the resistor R12 is grounded. The anode of the capacitor C11 is connected with the OUT_2 end, and a cathode of the capacitor C11 is grounded. The OUT_1 end is an anode of an electronic cigarette battery to be charged, and the OUT_2 end is a charging current or voltage detection terminal. A voltage across the resistor R12 detected by the OUT_2 terminal can be regarded as the charging voltage or a voltage across the resistor R11 can be used to calculate the charging current.

The microprocessor 101 is further configured to compare the current value detected by the charging detection module 102 with a preset second current value, or compare the voltage value detected by the charging detection module 102 with a preset second voltage value. If the detected current value is more than or equal to the preset second current value or the detected voltage value is less than or equal to the preset second voltage value, the microprocessor 101 controls the electronic cigarette charging module 103 to charge the electronic cigarette 200 in a first charging mode. If the detected current value is less than the preset second current value or the detected voltage value is more than the preset second voltage value, the microprocessor 101 controls the electronic cigarette charging module 103 to charging the electronic cigarette 200 in a second charging mode.

In the charging process according to the first charging mode or the second charging mode, the charging detection module 102 is further configured to detect the charging current value. The microprocessor 101 is further configured to compare the current value detected by the charging detection module 102 with a preset third current value. If the detected current value is less than the preset third current value, the microprocessor 101 controls the charging module 103 to stop charging the electronic cigarette 200.

Advantageously, in this embodiment of the present invention, the first charging mode is a charging mode that uses constant charging current and limits a charging voltage to be not more than 4.2V. The second charging mode is a charging mode that uses a 5V charging voltage. The preset first current value is more than the constant charging current value of the electronic cigarette. The preset second current value is more than the constant charging current of the electronic cigarette. The preset third current value can be set to be 10mA.

In the embodiment of the present invention, the preset first current value, the preset second current value, the preset second voltage value, the preset length of time, and the preset first voltage value are all set and stored by the microprocessor 101.

In the embodiment of the present invention, the electronic cigarette case further comprises a booster module 104, a low voltage detection module 105, an overcurrent detection module 106, an overvoltage detection module 107, a charging module 108, and a charging management module 109.

The charging module 108 is a charging interface, and is configured to connect with an external charging power supply to charge a rechargeable battery of the electronic cigarette case. The charging interface can be an USB charging interface connected with USB devices, and can further be an adapter charging interface connected with adapters.

The charging management module 109 is configured to manage the charging process that the rechargeable battery of the electronic cigarette case is charged by the external charging power supply, and to ensure that the charging mode of the rechargeable battery to be a constant current or constant voltage mode. When the external charging power supply charges the rechargeable battery of the electronic cigarette case, with use of the charging management module 109, the rechargeable battery 100 is quickly charged by constant current to supply power at first. When the power of the battery is nearly full, the charging mode is switched to a constant voltage mode, the charging current will decrease until the battery is fully charged. The external charging power supply can be a computer charging through a USB charging interface, an adapter charging through an adapter charging interface, etc.

The booster module 104 is configured to boost the voltage of the rechargeable battery 100 of the electronic cigarette case to charge the electronic cigarette 200. Since the voltage of the rechargeable battery 100 of the electronic cigarette case, after fully charged, is generally 4.2V, while charging the electronic cigarette 200 comprising a charging management circuit, the voltage to charge the rechargeable battery 100 needs to be slightly more than the voltage of the rechargeable battery 100 of the electronic cigarette case. Therefore, the voltage of the rechargeable battery 100 of the electronic cigarette case needs to be boosted by the booster module 104. In the embodiment of the present invention, the booster module 104 can be a booster chip, or a booster hardware circuit.

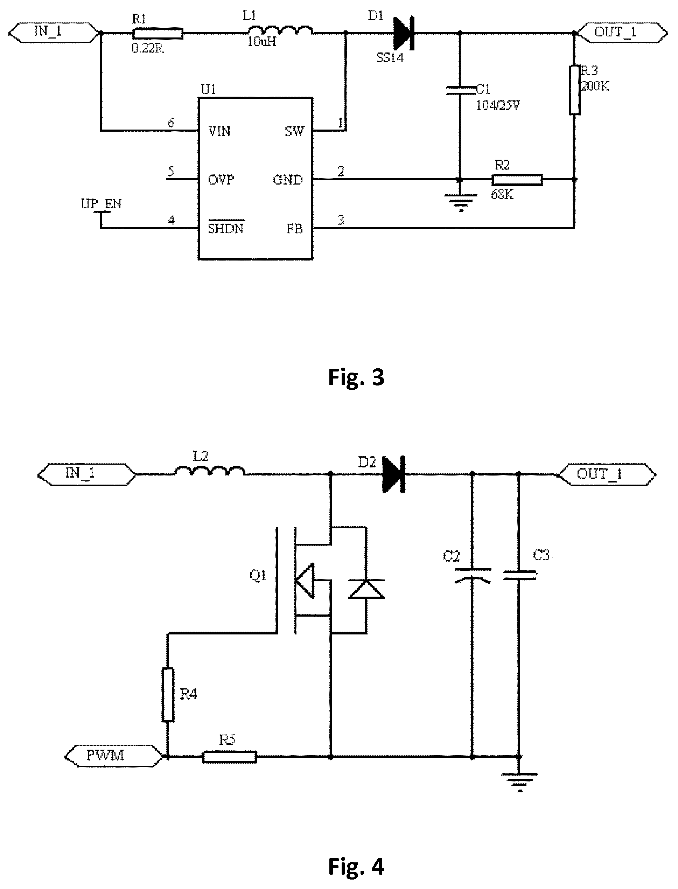

Referring to Fig. 3, it is a circuit diagram of the booster module of the electronic cigarette battery case according to a first embodiment of the present invention. In this embodiment of the present invention, a booster chip U1 is used as the booster module 104. The type of the boost chip U1 in Fig. 3 is CP2121, and the type of the boost chip U1 can also be MT3608, etc. In Fig. 3, a first pin of the booster chip U1 can be a switch pin; a second pin can be a grounded pin; a third pin can be a feedback voltage pin; and a fourth pin can be an enable pin. When the voltage of the fourth pin is more than 1.4V, the booster chip U1 starts working; and when the voltage of the fourth pin is less than 0.4V, the boost chip U1 will be in the off state. A fifth pin can be an overvoltage protection pin; and a sixth pin can be a chip working voltage pin.

In Fig. 3, the first pin of the booster chip U1 is connected with one end of an inductor L1 and an anode of an diode D1; the other end of the inductor L1 is connected with one end of the resistor R1; and the other end of the resistor R1 is connected with an IN_1 end and the sixth pin. The second pin is grounded, and is connected with a cathode of a capacitor C1; and an anode of the capacitor C1 is connected with the cathode of the diode D1 and the OUT_1 end. One end of the resistor R2 is grounded and is connected with the second pin, and is further connected with the cathode of the capacitor C1. One end of a resistor R3 is connected with the OUT_1 end and the cathode of the diode D1, and the other end of the resistor R3 is connected with one end of the resistor R2 and the third pin. The fourth pin is connected with the enable voltage end UP_EN. Wherein, the IN_1 end can be an anode of the rechargeable battery 100 of the electronic cigarette case, and the OUT_1 end can be an anode of a battery of the electronic cigarette to be charged.

Fig. 4 is a circuit diagram of a booster module of the electronic cigarette case according to a second embodiment of the present invention. In the second embodiment of the present invention, the booster module adopts a booster circuit. The booster circuit includes: a MOS transistor Q1, two resistors R4 and R5, two capacitors C2 and C3, an inductor L2, and a diode D2. Wherein, a gate of the MOS transistor Q1 is connected with a PWM end via the resistor R4, a source of the MOS transistor Q1 is grounded and is also connected with the PWM end via the resistor R5, and a drain of the MOS transistor Q1 is connected with both one end of the inductor L2 and an anode of the diode D2. The other end of the inductor L2 is connected with the IN_1 end. A cathode of the diode D2 is connected with an anode of the capacitor C2 and an anode of the capacitor C3, and is further connected with the OUT_1 end. A cathode of the capacitor C2 is grounded; and a cathode of the capacitor C3 is grounded. The IN_1 end is the anode of the rechargeable battery 100 of the electronic cigarette case, the OUT_1 end is the anode of the battery of the electronic cigarette case to be charged, and the PWM end is a pulse signal output end of the microprocessor 101. According to actual charging current detected by the overcurrent detection module 106 and actual charging voltage detected by the overvoltage detection module 107, the microprocessor 101 controls the MOS transistor Q1 to be turned on and off by adjusting the duty ratio of the pulse signal output by the pulse signal output end, and realizes adjustment of the charging voltage.

The overvoltage detection module 107 is configured to detect the voltage of the charging circuit in the electronic cigarette case and transmit the voltage detection result to the microprocessor 101. When the voltage detection result is that the voltage value detected is more than a preset voltage value, the microprocessor 101 will control the charging circuit to be turned off. Advantageously, in the embodiment of the present invention, the overvoltage detection module 107 can detect the voltage of the rechargeable battery 100 of the electronic cigarette case by a method of resistor dividing.

The overcurrent detection module 106 is configured to detect the current of the charging circuit in the electronic cigarette case and transmit the current detection results to the microprocessor 101. When the current detection result is that the current value detected is more than a preset current value, the microprocessor 101 will control the charging circuit to be turned off. Advantageously, the overcurrent detection module 106 according to the embodiment of the present invention can adopt circuits that are the same as the charging detection module 102 shown in above Fig. 2. The charging current can be calculated using the voltage of the resistor R11 detected by the OUT_2 end shown in Fig. 2, and when over-current happens, the microprocessor 101 turns off the charging circuit.

The low voltage detection module 105 is configured to detect the voltage of the rechargeable battery 100 in the electronic cigarette case and transmit the voltage detection result to the microprocessor 101. When the voltage detection result is that the voltage value of the rechargeable battery 100 is less than a preset voltage value, the microprocessor 101 will control to turn off the charging circuit.

Advantageously, the low voltage detection module 105 according to the embodiment of the present invention can adopt the same principle as the overvoltage detection module 106, that is, the low voltage detection module 105 can detect whether the voltage value of the rechargeable battery 100 of the electronic cigarette case is less than a preset threshold value by the method of resistor dividing when charging the electronic cigarette 200. If the voltage value of the rechargeable battery 100 of the electronic cigarette case is less than the preset threshold value, the charging is stopped to protect the rechargeable battery 100 of the electronic cigarette case.

The microprocessor 101 controls the circuit of the electronic cigarette case according to the voltage detection result of the overvoltage detection module 107 and the current detection result of the over-current detection module 106, respectively, and hence provides overvoltage protection and overcurrent protection to the charging circuit of the electronic cigarette case, and further provides low voltage protection to the rechargeable battery 100 according to low voltage detection result of the low voltage detection module 105.

In the embodiment of the present invention, the microprocessor 101 controls the electronic cigarette charging module 103 to charge the electronic cigarette 200 using the preset first voltage value for a preset length of time, and determines whether the electronic cigarette 200 includes a charging management module or not by means of limiting the maximum value of the charging current to be the preset first current value. Advantageously, the determining method is detailed as follows: the microprocessor 101 controls the electronic cigarette charging module 103 to charge the electronic cigarette 200 for 1s using a 5V voltage and a limited current A1 at first (advantageously, A1 can be set to be 1A, and A1 should be far more than constant charging current A2 of a conventional electronic cigarette charging management circuit, particularly, A1 ≥ 2A2). The charging detection module 102 detects charging current A3 and/or a charging voltage U1 during the charging process. The microprocessor 101 compares A3 with A2 or compares U1 with a preset second voltage value U2. If A3≥ (1+50%) A2 or U1≤ U2, the microprocessor 101 selects to charge the electronic cigarette 200 using a constant current and a limited charging voltage that is not more than 4.2V. If A3 < (1+50%) A2 or U1>U2, the microprocessor 101 selects to charge the electronic cigarette 200 with a 5V voltage. In the charging process, the charging detection module 102 continues to detect the charging current. When the current detected by the charging detection module 102 is less than or equal to 10mA, the microprocessor 101 controls the charging detection module 102 to stop charging the electronic cigarette 200.

In the embodiment of the present invention, the electronic cigarette case can charge the electronic cigarette 200 using different charging management modes. The principle is detailed as follows: when the electronic cigarette charging module 103 charges the electronic cigarette 200 using the preset first voltage value for the preset length of time, and the maximum value of the charging current is limited to be the preset first current value in the charging process, if the current value detected by the charging detection module 102 is less than the preset second current value or the voltage detected by the charging detection module 102 is more than the preset second voltage value, the electronic cigarette 200 is regarded as including a charging management circuit. Particularly, if the electronic cigarette 200 includes a charging management circuit, when the electronic cigarette charging module 103 charges the electronic cigarette 200 with the preset first voltage, such as 5 V, and the charging current is limited to be the preset first current value, the charging current value detected by charging detection module 102 will not change significantly (that is, the charging current detected by the charging detection module 102 will be less than the preset second current value), while the detected charging voltage value will change (that is, the charging voltage detected by the charging detection module 102 will be more than the preset second voltage value). Therefore, whether the electronic cigarette 200 includes a charging management circuit or not can be determined according to the current value or the voltage value detected by the charging detection module 102. If the electronic cigarette 200 includes a charging management circuit, after being boosted by the booster module 104, the charging voltage is set to be 5V to charge the electronic cigarette 200. If the electronic cigarette 200 does not include a charging management circuit, the electronic cigarette 200 is charged by the charging mode of using constant current and limiting the maximum of voltage to be 4.2 V.

In the embodiment of the present invention, a processor with a type of HT46R065B can be used as the microprocessor 101. According to the pins of the processor in type of HT46R065B, the PA4/PWM0/TC1 pins thereof can be selected as the aforementioned pulse signal output end, that is, the PWM end. Furthermore, a number of the input/output pins of the microprocessor are respectively connected with the charging detection module 102, the electronic cigarette charging module 103, the booster module 104, the low voltage detection module 105, the overcurrent detection module 106, the overvoltage detection module 107, the charging module 108, and the charging management module 109 to achieve the function of each module.

Understandably, in the embodiment of the present invention, the current detected by the overcurrent detection module 106 and the voltage detected by the overvoltage detection module 107 include the current and the voltage provided by the external power supply charging the rechargeable battery 100 of the electronic cigarette case, and further include the current and the voltage provided by the rechargeable battery 100 charging the electronic cigarette 200.

In the embodiment of the present invention, an electronic cigarette case is provided; and the electronic cigarette case can automatically select the charging modes. The electronic cigarette case is provided with a booster module, which can automatically select the charging modes after detecting charging management modes of the electronic cigarette. After using the booster module to boost the voltage, an electronic cigarette comprising the charging management circuit is charged with a voltage that is slightly more than a battery voltage (such as 5V), and an electronic cigarette without any charging management circuit is charged by a charging mode using constant current and limiting the maximum of voltage to be 4.2 V.

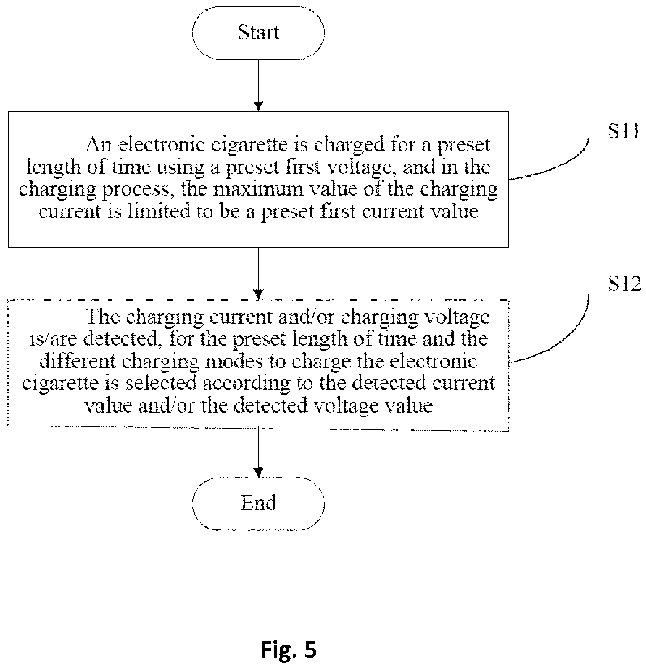

Fig. 5 is a flow chart of the charging method of electronic cigarettes according to a first embodiment of the present invention. In the charging method of electronic cigarettes according to the first embodiment of the present invention, the charging method of electronic cigarettes includes the following steps: S11: an electronic cigarette is charged for a preset length of time using a preset first voltage, and in the charging process, the maximum value of the charging current is limited to be a preset first current value; S12: during the charging process for the preset length of time, the charging current and/or charging voltage is/are detected, for the preset length of time and the different charging modes to charge the electronic cigarette is selected according to the detected current value and/or the detected voltage value.

Advantageously, the preset first voltage in the step S11 is 5V, the preset length of time is 1 s, and the preset first current value is more than constant current value of the electronic cigarette charging. In the charging method of electronic cigarettes according to the first embodiment of the present invention, by executing the step S12, different charging modes can be selected to charge the electronic cigarette according to the detected current value and/or the detected voltage value.

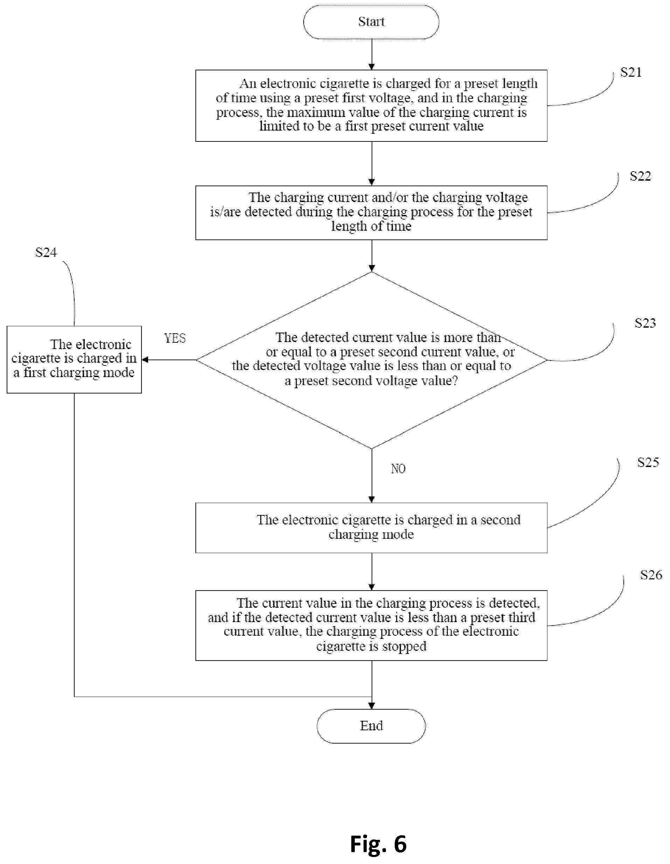

Fig. 6 is a flow chart of a charging method of electronic cigarettes according to a second embodiment of the present invention. In the charging method of electronic cigarettes according to the second embodiment of the present invention, the charging method of electronic cigarettes includes the following steps:
S21: an electronic cigarette is charged for a preset length of time using a preset first voltage, and in the charging process, the maximum value of the charging current is limited to be a first preset current value;
S22: the charging current and/or the charging voltage is/are detected during the charging process for the preset length of time;
S23: whether the detected current value is more than or equal to a preset second current value or not is determined, or whether the detected voltage value is less than or equal to a preset second voltage value or not is determined; if the detected current value is more than or equal to the preset second current value, or the detected voltage value is less than or equal to the preset second voltage value, step S24 is executed; if the detected current value is less than the preset second current value, or the detected voltage value is more than the preset second voltage value, step S25 is executed.
S24: the electronic cigarette is charged in a first charging mode, and step S26 is executed.
S25: the electronic cigarette is charged in a second charging mode, and step S26 is executed.
S26: the current value in the charging process is detected, and if the detected current value is less than a preset third current value, the charging process of the electronic cigarette is stopped.

Advantageously, the first charging mode of step S24 is a charging mode using constant current and limiting the maximum of voltage to be 4.2V. The second charging mode of step S25 is a charging mode using a 5V charging voltage. The preset first voltage in step S21 is 5V, the preset length of time is 1 s, and the preset first current value is more than constant current value of charging the electronic cigarette. The preset second current value of step S23 is more than the constant current value of charging the electronic cigarette. The preset third current value of step S26 can be 10mA.

In the charging method of electronic cigarettes according to the second embodiment of the present invention, when charging the electronic cigarette in the first charging mode or in the second charging mode, the voltage and the current are detected. When the detected voltage and the detected current are more than preset threshold values, charging is stopped to protect the charging circuit.

In the charging method of electronic cigarettes according to the second embodiment of the present invention, the steps S21, S22 and S23 are firstly executed to determine whether the charging electronic cigarette includes a charging management circuit or not. Advantageously, the determining method is detailed as follows: using a 5V voltage and limiting the current to be A1 to charge the electronic cigarette 200 for 1s firstly (advantageously, A1 can be 1 A, and A1 should be far more than the constant charging current A2 of a conventional electronic cigarette charging management circuit, particularly, A1 ≥2A2). Charging current A3 and/or a charging voltage U1 is detected. A3 is compared with A2 or U1 is compared with the preset second voltage value U2. If A3≥ (1+50%) A2 or U1≤ U2, it is illustrated that the electronic cigarette does not include a charging management circuit; and if A3 < (1+50%) A2 or U1>U2, it is illustrated that the electronic cigarette includes a charging management circuit. Particularly, if the electronic cigarette to be charged includes the charging management circuit, when the electronic cigarette is charged with the preset first voltage value, such as 5V, and the charging current is limited to be not more than the first current value , the detected charging current A3 will not change a Iot (that is, the detected current value will be less than the preset second current value), while the detected voltage U1 will change (that is, the detected voltage will be more than the preset second voltage value).

Therefore, by executing the steps S21, S22 and S23, whether the charging electronic cigarette includes a charging management circuit or not can be determined. If the electronic cigarette includes a charging management circuit, after the voltage of the rechargeable battery of the electronic cigarette case is boosted, the electronic cigarette is charged with a 5V voltage; and if the electronic cigarette does not include a charging management circuit, the electronic cigarette is charged by means of using constant current and limiting the maximum voltage to be 4.2V. In the process of charging, the charging current A3 is detected continuously, and when the detected current A3 is less than or equal to the preset third current value, such as 10mA, the charging process of the electronic cigarette will be stopped.

In the embodiments of the electronic cigarette case and the charging method of electronic cigarettes of the present invention, by detecting whether the electronic cigarette to be charged comprises a charging management circuit or not, the different charging modes can be automatically selected according to the types of different electronic cigarettes, and the electronic cigarette case is enabled to be compatible with charging processes of different electronic cigarettes. It is easy to use for users, and the cost can be reduced. The users' experience can be improved, and the users' demands can be met better.

While the embodiments of the present invention are described with reference to the accompanying drawings above, the present invention is not limited to the above-mentioned specific implementations. In fact, the above-mentioned specific implementations are intended to be exemplary not to be limiting. In the inspiration of the present invention, those of ordinary skills in the art can also make many modifications without breaking away from the subject of the present invention and the protection scope of the claims. All these modifications belong to the protection of the present invention.

## Claims

1. A charging method of electronic cigarettes, comprising:
using a preset first voltage to charge an electronic cigarette for a preset length of time, and setting the maximum value of charging current to be a preset first current value in the charging process;
detecting the charging current and/or a charging voltage in the charging process for the preset length of time, and selecting different charging modes to charge the electronic cigarette according to the detected current value and/or the detected voltage value.

2. The charging method according to claim 1, wherein, the charging modes include a first charging mode and a second charging mode;
when the detected current value is more than or equal to a preset second current value, or the detected voltage value is less than or equal to a preset second voltage value, the first charging mode is selected to charge the electronic cigarette;
when the detected current value is less than the preset second current value or the detected voltage value is more than the preset second voltage value, the second charging mode is selected to charge the electronic cigarette.

3. The charging method according to claim 2, wherein, the first charging mode is a charging mode that uses constant charging current and limits a charging voltage to be not more than 4.2V.

4. The charging method according to claim 2, wherein, the second charging mode is a charging mode that uses a 5V charging voltage.

5. The charging method according to claim 2, wherein, the preset second current value is more than the constant charging current value of the electronic cigarette.

6. The charging method according to claim 2, wherein, the method further includes: detecting the charging current value in the charging process of the first charging mode or the second charging mode, and stopping charging the electronic cigarette when the detected current value is less than a preset third current value.

7. The charging method according to claim 1, wherein, the preset first voltage is 5V.

8. The charging method according to claim 1, wherein, the preset length of time is 1 second.

9. The charging method according to claim 1, wherein, the preset first current value is more than the constant charging current value of the electronic cigarette.

10. An electronic cigarette case configured for charging electronic cigarettes, wherein, the electronic cigarette case includes:
a microprocessor, a charging detection module respectively connected with the microprocessor and the electronic cigarette, and an electronic cigarette charging module respectively connected with the microprocessor and the electronic cigarette;
the microprocessor is configured to control the charging module to charge the electronic cigarette using a preset first voltage for a preset length of time, and the maximum value of charging current is defined as a preset first current value in the charging process;
the charging detection module is configured to detect the charging current and/or a charging voltage in the charging process for the preset length of time;
according to the detected current value and/or the detected voltage value, the microprocessor is used to control the charging module of the electronic cigarette to select different charging modes to charge the electronic cigarette.

11. The electronic cigarette case according to claim 10, wherein, the charging modes include a first charging mode and a second charging mode; when the current value detected by the charging detection module is more than or equal to a preset second current value, or the voltage value detected by the charging detection module is less than or equal to a second voltage preset value, the microprocessor controls the electronic cigarette charging module to select the first charging mode to charge the electronic cigarette;
when the current value detected by the charging detection module is less than the preset second current value or the voltage value detected by the charging detection module is more than the preset second voltage value, the microprocessor controls the electronic cigarette charging module to select the second charging mode to charge the electronic cigarette.

12. The electronic cigarette case according to claim 11, wherein, the first charging mode is a charging mode that uses constant charging current and limits a charging voltage to be not more than 4.2V.

13. The electronic cigarette case according to claim 11, wherein, the second charging mode is a charging mode that uses a 5V charging voltage.

14. The electronic cigarette case according to claim 11, wherein, in the charging process that the electronic cigarette charging module charges in the first charging mode or the second charging mode, the charging detection module is further configured to detect the charging current value;
the microprocessor is further used to compare the current value in the charging process of the electronic cigarette charging module detected by the charging detection module and a preset third current value, and if the detected current value is less than the preset third current value, the electronic cigarette charging module is controlled to stop charging the electronic cigarette.

15. The electronic cigarette case according to claim 10, wherein, the electronic cigarette case further includes a booster module and a rechargeable battery, the booster module is used to boost a voltage of the battery to charge the electronic cigarette.

16. The electronic cigarette case according to claim 15, wherein, the electronic cigarette case further includes a low voltage detection module, an overcurrent detection module, an overvoltage detection module, a charging module, and a charging management module;
the low voltage detection module is configured to detect the voltage of the rechargeable battery in the electronic cigarette case and a detected voltage value is transmitted to the microprocessor, and when the detected voltage value is less than a preset voltage value, the microprocessor will control to turn off the charging circuit;
the overcurrent detection module is configured to detect a current of the charging circuit in the electronic cigarette case and a detected current value is transmitted to the microprocessor, and when the detected current value is more than a preset current value, the microprocessor will control to turn off the charging circuit;
the overvoltage detection module is configured to detect a voltage of the charging circuit in the electronic cigarette case and a detected voltage value is transmitted to the microprocessor, and when the detected voltage value is more than a preset voltage value, the microprocessor will control to turn off the charging circuit;
the charging module is configured to connect with an external power source, and to charge the rechargeable battery in the electronic cigarette case; and
the charging management module is configured to manage the charging process that the rechargeable battery of the electronic cigarette case is charged by the external charging power source, and to ensure that a charging mode used to charge the rechargeable battery is a constant current or constant voltage mode.

17. The electronic cigarette case according to claim 10, wherein, the preset first current value is more than the constant charging current value of the electronic cigarette.

18. The electronic cigarette case according to claim 10, wherein, the preset second current value is more than the constant charging current value of the electronic cigarette.
